# EUROPEAN PATENT APPLICATION

(11) **EP 4 768 272 A1**
(43) Date of publication of application: **01.07.2026**
(21) Application number: 25224860.4
(22) Date of filing: 18.12.2025
(51) Int. Cl.: B60C 1/00, C08L 9/00, C08L 9/06, C08K 3/04, C08L 45/00

(54) **RUBBER COMPOSITION FOR TIRE TREADS, RUBBER COMPOSITION FOR TIRE SIDEWALLS, AND PNEUMATIC TIRE**

(30) Priority: 25.12.2024 JP 2024229298; 25.12.2024 JP 2024229200
(71) Applicant: Toyo Tire Corporation, Itami-shi, Hyogo 664-0847 (JP)
(72) Inventor: SAIKI, Akira, ITAMI-SHI, HYOGO, 664-0847 (JP)
(74) Representative: Cabinet Beau de Loménie

(57) **Abstract**

A rubber composition for tire treads or tire sidewalls comprising a diene-based rubber, a filler, a vulcanizing agent, an antiaging agent, and a graphene powder, wherein the antiaging agent contains at least an amine-ketone-based antiaging agent, and a content of the graphene powder is 1 to 10 parts by mass when the total amount of the diene-based rubber is taken as 100 parts by mass. It is preferred that in the rubber composition for tire treads or tire sidewalls, the rubber composition does not contain (N-(1,3-dimethylbutyl)-N'-phenyl-p-phenylenediamine).

## Description

### BACKGROUND OF THE INVENTION

### Field of the Invention

The present invention relates to a rubber composition for tire treads, a rubber composition for tire sidewalls, and a pneumatic tire.

### Description of the Related Art

A surface portion of the pneumatic tire is referred to as a tire tread, and from the viewpoint of improving durability, it is essential to improve tear resistance during running of the tire. However, since the tire tread is always exposed to the atmosphere, an antiaging agent is generally added in the rubber composition for tire treads as a raw material from the viewpoint of preventing aging caused by ultraviolet rays, heat, and the like.

In addition, side surface portion of a pneumatic tire is referred to as a tire sidewall, and from the viewpoint of improving durability during running of the tire, it is essential to improve reinforcing properties of a rubber part (vulcanized rubber) constituting the tire sidewall. However, since the tire sidewall is always exposed to the atmosphere, an antiaging agent is generally added in the rubber composition for tire sidewalls as a raw material from the viewpoint of preventing aging caused by ultraviolet rays, heat, and the like.

Patent Document 1 below describes a pneumatic tire comprising: a tread portion, the tread portion comprising a tread cap layer and a tread base layer; the tread cap layer comprising a ground-contact surface; the tread portion comprising a sipe comprising an open end and a closed end, the sipe extending radially inward from the ground-contacting surface of the tread portion to at least the tread base layer; the tread cap layer being composed of a tread cap composition, the tread cap composition comprising 100 parts of at least one diene-based elastomer and less than 0.5 parts by weight of talc, based on 100 parts by weight of the elastomer; and the tread base layer underlying the tread cap layer, and the tread base layer being composed of a tread base composition, the tread base composition comprising 100 parts of at least one diene-based elastomer and a platelet type filler, the platelet type filler in the tread base composition being present in the range of 0.5 to 20 parts by weight based on 100 parts by weight of the elastomer in the tread base composition.

Patent Document 2 below describes a pneumatic rubber tire having a circumferential tread of a cap/base configuration comprised of an outer tread cap rubber layer and an internal tread rubber layer where said internal tread rubber layer rubber composition is comprised of, based upon parts by weight per 100 parts by weight rubber (phr): (A) rubber(s) comprised of: (1) about 10 to about 80 phr of syndiotactic-1,2-polybutadiene, and (2) about 90 to about 20 phr of at least one additional diene-based elastomer comprised of at least one of polymers and copolymers of at least one of isoprene and 1,3-butadiene and copolymers of styrene and at least one of isoprene and 1,3-butadiene, a pneumatic rubber tire is provided having a component comprised of a rubber composition comprised of, based on parts by weight per 100 parts by weight rubber (phr): (B) elastomer(s) comprised of: (1) about 10 to about 80 phr of syndiotactic-1,2-polybutadiene, and (2) about 90 to about 20 phr of at least one additional diene-based elastomer comprised of at least one of polymers and copolymers of at least one of isoprene and 1,3-butadiene and copolymers of styrene and at least one of isoprene and 1,3-butadiene, (C) up to about 40 phr of filler reinforcement comprised of: (1) carbon black, or (2) amorphous, synthetic silica (e.g. precipitated silica), or (3) combination of carbon black and (said) precipitated silica, or (4) platelets of exfoliated clay (e.g. exfoliated montmorillonite clay) in an amount of up to about 10 phr and clay (unexfoliated clay such as, for example, kaolinite clay) in an amount of up to about 40 phr; wherein said filler reinforcement comprised of at least one said carbon black and precipitated silica may optionally additionally contain at least one of said platelets of exfoliated clay in an amount of up to about 10 phr and said clay (unexfoliated clay) in an amount of up to about 40 phr; wherein said carbon black based filler is comprised of at least one of: (5) rubber reinforcing carbon black (C1) having a DBP value in a range of from about 62 to about 150 cc/100 g and an Iodine value in a range of from about 20 to about 205 m²/g in an amount of from about 5 to about 40 phr, (6) electrically conductive carbon black (C2) having a DBP value in a range of from about 175 to about 570 cc/100 g and an Iodine value in a range of from about 180 to about 650 m²/g in an amount of from about 5 to about 20 phr, (7) graphene platelets (C3) comprised of at least partially exfoliated graphite in an amount of up to about 15 phr, and (8) carbon nanotubes (C4) in an amount of up to about 10 phr.

Patent Document 3 below describes a rubber composition containing a diene-based rubber, graphene oxide, and carbon black, in which a content of the graphene oxide is 0.1 to 10 parts by mass and a content of the carbon black is 30 to 80 parts by mass per 100 parts by mass of the diene-based rubber, and an oxygen content of the graphene oxide is 45 to 60 atom%.

Patent Document 4 below describes a rubber composition containing a rubber component, an sp² type carbon material, and a metal oxide, in which the sp² type carbon material is one or more selected from the group consisting of graphite, graphene, fullerene, and carbon nanohorn.

### Prior Art Document

### Patent Documents

Patent Document 1: JP-A-2019-528207
Patent Document 2: JP-A-2013-136745
Patent Document 3: JP-B2-7385429
Patent Document 4: JP-A-2015-143298

### SUMMARY OF THE INVENTION

As an antiaging agent, N-(1,3-dimethylbutyl)-N'-phenyl-p-phenylenediamine (hereinafter also referred to as "6PPD") is known, and has been often used as a general agent in the rubber industry. For example, when 6PPD is blended for tire tread applications, 6PPD reacts with ozone to become 6PPD-quinone. However, since 6PPD-quinone is toxic, it is the actual circumstances the amount of 6PPD used is desired to be reduced as much as possible in reality. In the technique described in Patent Documents 1 to 2, graphene is added in a rubber composition, but as a result of intensive studies by the present inventor, it has been found that there is room for further improvement from the viewpoint of improving the tear resistance of a finally obtained vulcanized rubber while reducing the amount of 6PPD used in the rubber composition.

As an antiaging agent, N-(1,3-dimethylbutyl)-N'-phenyl-p-phenylenediamine (hereinafter also referred to as "6PPD") is known, and has been often used as a general agent in the rubber industry. For example, when 6PPD is blended for tire sidewall applications, 6PPD reacts with ozone to become 6PPD-quinone. However, since 6PPD-quinone is toxic, it is the actual circumstances the amount of 6PPD used is desired to be reduced as much as possible in reality. In the technique described in Patent Documents 3 to 4, graphene is added in a rubber composition, but as a result of intensive studies by the present inventor, it has been found that there is room for further improvement from the viewpoint of improving the reinforcing properties of a finally obtained vulcanized rubber while reducing the amount of 6PPD used in the rubber composition.

In view of the above circumstances, it is an object of the present invention is to provide a rubber composition for tire treads capable of improving the tear resistance of a finally obtained vulcanized rubber while reducing the content of N-(1,3-dimethylbutyl)-N'-phenyl-p-phenylenediamine as an antiaging agent, and a pneumatic tire including the vulcanized rubber of the rubber composition for tire treads at least in a tread portion.

Further, an object of the present invention to provide a rubber composition for tire sidewalls capable of improving the reinforcing properties of a finally obtained vulcanized rubber while reducing the content of N-(1,3-dimethylbutyl)-N'-phenyl-p-phenylenediamine as an antiaging agent, and a pneumatic tire including the vulcanized rubber of the rubber composition for tire sidewalls at least in a sidewall portion.

The above object can be achieved by the following configurations. That is, the present invention relates to a rubber composition (1) for tire treads comprising a diene-based rubber, a filler, a vulcanizing agent, an antiaging agent, and a graphene powder, wherein
the antiaging agent contains at least an amine-ketone-based antiaging agent, and
a content of the graphene powder is 1 to 10 parts by mass when the total amount of the diene-based rubber is taken as 100 parts by mass.

In the rubber composition (1) for tire treads, a rubber composition (2) for tire treads in which the rubber composition does not contain (N-(1,3-dimethylbutyl)-N'-phenyl-p-phenylenediamine) is preferred.

In the rubber composition (1) or (2) for tire treads, a rubber composition (3) for tire treads in which the diene-based rubber is at least one selected from the group consisting of natural rubber, isoprene rubber, styrene-butadiene-based rubber, and butadiene-based rubber is preferred.

In any one of the rubber compositions (1) to (3) for tire treads, a rubber composition (4) for tire treads in which the filler is carbon black having an iodine adsorption of 105 to 135 g/kg and a DBP absorption of 115 to 135 cm³/100 g is preferred.

In any one of the rubber compositions (1) to (4) for tire treads, a rubber composition (5) for tire treads in which the vulcanizing agent contains at least sulfur, a sulfenamide-based vulcanization accelerator and a guanidine-based vulcanization accelerator, and a content of sulfur is higher than that of the total amount of the sulfenamide-based vulcanization accelerator and the guanidine-based vulcanization accelerator is preferred.

In any one of the rubber compositions (1) to (5) for tire treads, a rubber composition (6) for tire treads in which the amine-ketone-based antiaging agent is a 2,2,4-trimethyl-1,2-dihydroquinoline polymer is preferred.

The present invention also relates to a pneumatic tire (7) comprising a vulcanized rubber of any one of the rubber compositions (1) to (6) for tire treads in at least a tread portion.

The present invention also relates to a pneumatic tire (8) comprising a vulcanized rubber of any one of the rubber compositions (1) to (6) for tire treads in at least a surface of a tread portion.

The above object can also be achieved by the following configurations. That is, the present invention relates to a rubber composition (9) for tire sidewalls comprising a diene-based rubber, a filler, a vulcanizing agent, an antiaging agent, and a graphene powder, wherein
the antiaging agent contains at least an amine-ketone-based antiaging agent, and
a content of the graphene powder is 1 to 10 parts by mass when the total amount of the diene-based rubber is taken as 100 parts by mass.

In the rubber composition (9) for tire sidewalls, a rubber composition (10) for tire treads in which the rubber composition does not contain (N-(1,3-dimethylbutyl)-N'-phenyl-p-phenylenediamine) is preferred.

In the rubber composition (9) or (10) for tire sidewalls, a rubber composition (11) for tire sidewalls in which is the diene-based rubber is at least one selected from the group consisting of natural rubber, isoprene rubber, styrene-butadiene-based rubber, and butadiene-based rubber preferred.

In any one of the rubber compositions (9) to (11) for tire sidewalls, a rubber composition (12) for tire sidewalls in which the filler is carbon black having an iodine adsorption of 75 to 100 g/kg and a DBP absorption of 95 to 130 cm³/100 g is preferred.

In any one of the rubber compositions (9) to (12) for tire treads, a rubber composition (13) for tire sidewalls in which the vulcanizing agent contains at least sulfur and a sulfenamide-based vulcanization accelerator, and a content of sulfur is higher than that of a content of the sulfenamide-based vulcanization accelerator is preferred.

In any one of the rubber compositions (9) to (13) for tire treads, a rubber composition (14) for tire sidewalls in which the amine-ketone-based antiaging agent is a 2,2,4-trimethyl-1,2-dihydroquinoline polymer is preferred.

The present invention also relates to a pneumatic tire (15) comprising a vulcanized rubber of any one of the rubber compositions (9) to (14) for tire sidewalls in at least a sidewall portion.

N-(1,3-Dimethylbutyl)-N'-phenyl-p-phenylenediamine (6PPD) can impart a high antiaging effect to a vulcanized rubber, but it is as described above that the amount of 6PPD used should be reduced as much as possible since 6PPD-quinone is formed by ozone exposure particularly when the vulcanized rubber is used for tire treads applications. As a result of intensive studies, the present inventor has found that by using an amine-ketone-based antiaging agent and graphene in combination, the tear resistance of the finally obtained vulcanized rubber can be improved while reducing the content of 6PPD. The reason why such an effect is exhibited is not clear, but the following reasons can be considered.

When the graphene powder is kneaded in the diene-based rubber, the graphene powder is easily aggregated and hardly dispersed. On the other hand, the amine-ketone-based antiaging agent has a softening point of, for example, a 2,2,4-trimethyl-1,2-dihydroquinoline polymer of 80 to 110°C and is considered to be liquid at the time of kneading the rubber composition. Therefore, when the rubber composition is kneaded, the graphene powder tends to be uniformly dispersed due to the softening effect of the amine-ketone-based antiaging agent. As a result, it is presumed that the reinforcing effect of the graphene powder is effectively exhibited while reducing the blending amount of 6PPD, so that the tear resistance of the finally obtained vulcanized rubber can be improved.

The vulcanized rubber of the rubber composition according to the present invention can improve the tear resistance of the finally obtained vulcanized rubber while reducing the content of 6PPD. Therefore, the vulcanized rubber of the rubber composition according to the present invention is particularly useful for a tread portion of a pneumatic tire requiring durability.

N-(1,3-Dimethylbutyl)-N'-phenyl-p-phenylenediamine (6PPD) can impart a high antiaging effect to a vulcanized rubber, but it is as described above that the amount of 6PPD used should be reduced as much as possible since 6PPD-quinone is formed by ozone exposure particularly when the vulcanized rubber is used for tire sidewalls applications. As a result of intensive studies, the present inventor has found that by using an amine-ketone-based antiaging agent and graphene in combination, the reinforcing properties of the finally obtained vulcanized rubber can be improved while reducing the content of 6PPD. The reason why such an effect is exhibited is not clear, but the following reasons can be considered.

When the graphene powder is kneaded in the diene-based rubber, the graphene powder is easily aggregated and hardly dispersed. On the other hand, the amine-ketone-based antiaging agent has a softening point of, for example, a 2,2,4-trimethyl-1,2-dihydroquinoline polymer of 80 to 110°C and is considered to be liquid at the time of kneading the rubber composition. Therefore, when the rubber composition is kneaded, the graphene powder tends to be uniformly dispersed due to the softening effect of the amine-ketone-based antiaging agent. As a result, it is presumed that the reinforcing effect of the graphene powder is effectively exhibited while reducing the blending amount of 6PPD, so that the reinforcing properties of the finally obtained vulcanized rubber can be improved.

The vulcanized rubber of the rubber composition according to the present invention can improve the reinforcing properties of the finally obtained vulcanized rubber while reducing the content of 6PPD. Therefore, the vulcanized rubber of the rubber composition according to the present invention is particularly useful for a sidewall portion of a pneumatic tire requiring durability.

### DETAILED DESCRIPTION OF THE PREFERRED EMBODIMENTS

The rubber composition for tire treads according to the first embodiment of the present invention contains a diene-based rubber, a filler, a vulcanizing agent, an antiaging agent, and a graphene powder.

The rubber composition according to the first embodiment of the present invention contains a diene-based rubber. Examples of the diene-based rubber include, but are not limited to, natural rubber (NR), isoprene rubber (IR), butadiene-based rubber (BR), styrene-butadiene-based rubber (SBR), acrylonitrile-butadiene-based rubber (NBR), chloroprene rubber (CR), a styrene-isoprene copolymer rubber, a butadiene-isoprene copolymer rubber, and a styrene-isoprene-butadiene copolymer rubber. These diene-based rubbers may be used singly or in combination of two or more of them. From the viewpoint of solving the problems, in the rubber composition for tire treads according to the first embodiment of the present invention, the diene-based rubber is preferably at least one selected from the group consisting of natural rubber, isoprene rubber, styrene-butadiene-based rubber, and butadiene-based rubber.

As the filler, for example, carbon black or silica may be contained.

Examples of the carbon black that can be used include carbon blacks usually used in the rubber industry, such as SAF, ISAF, HAF, FEF, and GPF; and conductive carbon blacks such as acetylene black and ketjen black. From the viewpoint of solving the problems, the rubber composition for tire treads according to the first embodiment of the present invention preferably contains, as a filler, carbon black having an iodine adsorption of 105 to 135 g/kg and a DBP absorption of 115 to 135 cm³/100 g. The content of the carbon black in the rubber composition for tire treads according to the first embodiment of the present invention is preferably 5 to 80 parts by mass when a total amount of the diene-based rubber is taken as 100 parts by mass.

Examples of the silica to be used include silicas usually used for rubber reinforcement, such as wet silica, dry silica, sol-gel silica, and surface-treated silica. Among these, wet silica is preferred. The content of the silica in the rubber composition for tire treads according to the first embodiment of the present invention is preferably 0 to 80 parts by mass when the total amount of the diene-based rubber is taken as 100 parts by mass.

When silica is contained as a filler, a silane coupling agent is also preferably contained together. The silane coupling agent is not limited as long as sulfur is contained in the molecule thereof, and various silane coupling agents to be added to rubber compositions together with silica may be used. Examples of such silane coupling agents include: sulfidesilanes such as bis(3-triethoxysilylpropyl)tetrasulfide (e.g., "Si69" manufactured by Evonik Japan Co., Ltd.), bis(3-triethoxysilylpropyl)disulfide (e.g., "Si75" manufactured by Evonik Japan Co., Ltd.), bis(2-triethoxysilylethyl)tetrasulfide, bis(4-triethoxysilylbutyl)disulfide, bis(3-trimethoxysilylpropyl)tetrasulfide, and bis(2-trimethoxysilylethyl)disulfide; mercaptosilanes such as γ-mercaptopropyltrimethoxysilane, γ-mercaptopropyltriethoxysilane, mercaptopropylmethyldimethoxysilane, mercaptopropyldimethylmethoxysilane, and mercaptoethyltriethoxysilane; and protected mercaptosilanes such as 3-octanoylthio-1-propyltriethoxysilane and 3-propionylthiopropyltrimethoxysilane. The content of the silane coupling agent is preferably 2 to 20 mass% when a total amount of silica is taken as 100 mass%.

As the vulcanizing agent, sulfur and a vulcanization accelerator can be suitably used.

The sulfur may be ordinary sulfur for rubber, and sulfur such as powdered sulfur, precipitated sulfur, insoluble sulfur, or highly dispersible sulfur can be used. The content of sulfur in the rubber composition for tire treads according to the first embodiment of the present invention is preferably 0.5 to 5 parts by mass when the total amount of the diene-based rubber is taken as 100 parts by mass.

Examples of the vulcanization accelerator include vulcanization accelerators usually used for rubber vulcanization, such as a sulfenamide-based vulcanization accelerator, a thiuram-based vulcanization accelerator, a thiazole-based vulcanization accelerator, a thiourea-based vulcanization accelerator, a guanidine-based vulcanization accelerator, and a dithiocarbamic acid salt-based vulcanization accelerator, and these may be used singly or in an appropriate combination. However, from the viewpoint of solving the problems, the rubber composition for tire treads according to the first embodiment of the present invention preferably contains a sulfenamide-based vulcanization accelerator and a guanidine-based vulcanization accelerator as the vulcanization accelerator. The content of the vulcanization accelerator, more preferably the total amount of the sulfenamide-based vulcanization accelerator and the guanidine-based vulcanization accelerator, in the rubber composition for tire treads according to the second embodiment of the present invention is preferably 0.1 to 4.5 parts by mass when the total amount of the diene-based rubber is taken as 100 parts by mass.

From the viewpoint of solving the problems, the rubber composition for tire treads according to the first embodiment of the present invention contains at least sulfur, a sulfenamide-based vulcanization accelerator and a guanidine-based vulcanization accelerator as the vulcanizing agents, and the content of sulfur is preferably larger than that of the total amount of the sulfenamide-based vulcanization accelerator and the guanidine-based vulcanization accelerator, and the content of sulfur is more preferably 1.1 times or more the total amount of the sulfenamide-based vulcanization accelerator and the guanidine-based vulcanization accelerator. In addition, the content of sulfur is preferably three times or less and more preferably twice or less the content of the vulcanization accelerator.

Examples of the antiaging agent include an aromatic amine-based antiaging agent, an amine-ketone-based antiaging agent, a monophenol-based antiaging agent, a bisphenol-based antiaging agent, a polyphenol-based antiaging agent, a dithiocarbamic acid salt-based antiaging agent, and a thiourea-based antiaging agent, which are usually used for rubbers. However, the rubber composition for tire treads according to the first embodiment of the present invention contains at least an amine-ketone-based antiaging agent. Examples of the amine-ketone-based antiaging agent include a 2,2,4-trimethyl-1,2-dihydroquinoline polymer, 6-ethoxy-1,2-dihydro-2,2,4-trimethylquinoline, and a reaction product of diphenylamine and acetone, and a 2,2,4-trimethyl-1,2-dihydroquinoline polymer is particularly preferable. On the other hand, in view of environmental aspects, in the rubber composition for tire treads according to the first embodiment of the present invention, when the total amount of the diene-based rubber is taken as 100 parts by mass, the blending amount of the N-(1,3-dimethylbutyl)-phenyl N'-phenylenediamine (6PPD) is preferably 3 parts by mass or less, more preferably 1 parts by mass or less, and particularly preferably no 6PPD is contained as an anti-aging agent.

Graphene is a two-dimensional sheet-like substance classified as a nanocarbon material, and has a structure spread with six-membered rings made of sp² carbon. Graphene is easily aggregated or bonded to each other by van der Waals force, and in the present invention, graphene alone or powdery graphene powder in which two or more graphenes are aggregated or bonded is used. From the viewpoint of solving the problems, the graphene used in the rubber composition for tire treads according to the first embodiment of the present invention preferably has a BET specific surface area of 550 to 850 m²/g, more preferably 650 to 750 m²/g as measured by BET method. The content of the graphene powder in the rubber composition for tire treads according to the first embodiment of the present invention is preferably 1 to 10 parts by mass when the total amount of the diene-based rubber is taken as 100 parts by mass.

The rubber composition for tire treads according to the first embodiment of the present invention contains a diene-based rubber, a filler, a vulcanizing agent, an antiaging agent, and a graphene powder. The rubber composition for tire treads according to the first embodiment of the present invention may contain, in addition to the above, zinc oxide, stearic acid, a softener such as wax or oil, a processing aid, and others.

The rubber composition for tire treads according to the first embodiment of the present invention is obtained by kneading not only the diene-based rubber, the filler, the vulcanizing agent, the antiaging agent, and the graphene powder but also zinc oxide, stearic acid, the softener such as wax, the processing aid, and others using a kneading machine usually used in the rubber industry, such as a Banbury mixer, a kneader, or a roll.

A method for blending the above components is not limited, and any one of the following methods may be used: a method in which components to be blended other than vulcanization-type compounding agents such as sulfur and a vulcanization accelerator are previously kneaded to prepare a master batch, the remaining components are added to the master batch, and the resultant is further kneaded, a method in which components are added in any order and kneaded, and a method in which all the components are added at the same time and kneaded.

The vulcanized rubber of the rubber composition according to the first embodiment of the present invention can improve the tear resistance of the finally obtained vulcanized rubber while reducing the content of 6PPD. Therefore, the vulcanized rubber of the rubber composition according to the first embodiment of the present invention is particularly useful for a tread portion of a pneumatic tire requiring durability.

The rubber composition for tire sidewalls according to the second embodiment of the present invention contains a diene-based rubber, a filler, a vulcanizing agent, an antiaging agent, and a graphene powder.

The rubber composition according to the second embodiment of the present invention contains a diene-based rubber. Examples of the diene-based rubber include, but are not limited to, natural rubber (NR), isoprene rubber (IR), butadiene-based rubber (BR), styrene-butadiene-based rubber (SBR), acrylonitrile-butadiene-based rubber (NBR), chloroprene rubber (CR), a styrene-isoprene copolymer rubber, a butadiene-isoprene copolymer rubber, and a styrene-isoprene-butadiene copolymer rubber. These diene-based rubbers may be used singly or in combination of two or more of them. From the viewpoint of solving the problems, in the rubber composition for tire sidewalls according to the second embodiment of the present invention, the diene-based rubber is preferably at least one selected from the group consisting of natural rubber, isoprene rubber, styrene-butadiene-based rubber, and butadiene-based rubber.

As the filler, for example, carbon black or silica may be contained.

Examples of the carbon black that can be used include carbon blacks usually used in the rubber industry, such as SAF, ISAF, HAF, FEF, and GPF; and conductive carbon blacks such as acetylene black and ketjen black. From the viewpoint of solving the problems, the rubber composition for tire sidewalls according to the second embodiment of the present invention preferably contains, as a filler, carbon black having an iodine adsorption of 75 to 100 g/kg and a DBP absorption of 95 to 130 cm³/100 g. The content of the carbon black in the rubber composition for tire sidewalls according to the second embodiment of the present invention is preferably 5 to 80 parts by mass when a total amount of the diene-based rubber is taken as 100 parts by mass.

Examples of the silica to be used include silicas usually used for rubber reinforcement, such as wet silica, dry silica, sol-gel silica, and surface-treated silica. Among these, wet silica is preferred. The content of the silica in the rubber composition for tire sidewalls according to the second embodiment of the present invention is preferably 1 to 50 parts by mass when the total amount of the diene-based rubber is taken as 100 parts by mass.

When silica is contained as a filler, a silane coupling agent is also preferably contained together. The silane coupling agent is not limited as long as sulfur is contained in the molecule thereof, and various silane coupling agents to be added to rubber compositions together with silica may be used. Examples of such silane coupling agents include: sulfidesilanes such as bis(3-triethoxysilylpropyl)tetrasulfide (e.g., "Si69" manufactured by Evonik Japan Co., Ltd.), bis(3-triethoxysilylpropyl)disulfide (e.g., "Si75" manufactured by Evonik Japan Co., Ltd.), bis(2-triethoxysilylethyl)tetrasulfide, bis(4-triethoxysilylbutyl)disulfide, bis(3-trimethoxysilylpropyl)tetrasulfide, and bis(2-trimethoxysilylethyl)disulfide; mercaptosilanes such as γ-mercaptopropyltrimethoxysilane, γ-mercaptopropyltriethoxysilane, mercaptopropylmethyldimethoxysilane, mercaptopropyldimethylmethoxysilane, and mercaptoethyltriethoxysilane; and protected mercaptosilanes such as 3-octanoylthio-1-propyltriethoxysilane and 3-propionylthiopropyltrimethoxysilane. The content of the silane coupling agent is preferably 2 to 20 mass% when a total amount of silica is taken as 100 mass%.

As the vulcanizing agent, sulfur and a vulcanization accelerator can be suitably used.

The sulfur may be ordinary sulfur for rubber, and sulfur such as powdered sulfur, precipitated sulfur, insoluble sulfur, or highly dispersible sulfur can be used. The content of sulfur in the rubber composition for tire sidewalls according to the second embodiment of the present invention is preferably 0.1 to 10 parts by mass when the total amount of the diene-based rubber is taken as 100 parts by mass.

Examples of the vulcanization accelerator include vulcanization accelerators usually used for rubber vulcanization, such as a sulfenamide-based vulcanization accelerator, a thiuram-based vulcanization accelerator, a thiazole-based vulcanization accelerator, a thiourea-based vulcanization accelerator, a guanidine-based vulcanization accelerator, and a dithiocarbamic acid salt-based vulcanization accelerator, and these may be used singly or in an appropriate combination. However, from the viewpoint of solving the problems, the rubber composition for tire sidewalls according to the second embodiment of the present invention preferably contains a sulfenamide-based vulcanization accelerator as the vulcanization accelerator. The content of the vulcanization accelerator, more preferably the sulfenamide-based vulcanization accelerator, in the rubber composition for tire sidewalls according to the second embodiment of the present invention is preferably 0.1 to 5 parts by mass when the total amount of the diene-based rubber is taken as 100 parts by mass.

From the viewpoint of solving the problems, the rubber composition for tire sidewalls according to the second embodiment of the present invention contains at least sulfur and a sulfenamide-based vulcanization accelerator as the vulcanizing agents, and the content of sulfur is preferably larger than that of the content of the sulfenamide-based vulcanization accelerator, and the content of sulfur is more preferably twice or more the content of the vulcanization accelerator. In addition, the content of sulfur is preferably four times or less and more preferably three times or less the content of the vulcanization accelerator.

Examples of the antiaging agent include an aromatic amine-based antiaging agent, an amine-ketone-based antiaging agent, a monophenol-based antiaging agent, a bisphenol-based antiaging agent, a polyphenol-based antiaging agent, a dithiocarbamic acid salt-based antiaging agent, and a thiourea-based antiaging agent, which are usually used for rubbers. However, the rubber composition for tire sidewalls according to the second embodiment of the present invention contains at least an amine-ketone-based antiaging agent. Examples of the amine-ketone-based antiaging agent include a 2,2,4-trimethyl-1,2-dihydroquinoline polymer, 6-ethoxy-1,2-dihydro-2,2,4-trimethylquinoline, and a reaction product of diphenylamine and acetone, and a 2,2,4-trimethyl-1,2-dihydroquinoline polymer is particularly preferable. On the other hand, in view of environmental aspects, in the rubber composition for tire sidewalls according to the second embodiment of the present invention, when the total amount of the diene-based rubber is taken as 100 parts by mass, the blending amount of the N-(1,3-dimethylbutyl)-phenyl N'-phenylenediamine (6PPD) is preferably 3 parts by mass or less, more preferably 1 parts by mass or less, and particularly preferably no 6PPD is contained as an anti-aging agent.

Graphene is a two-dimensional sheet-like substance classified as a nanocarbon material, and has a structure spread with six-membered rings made of sp² carbon. Graphene is easily aggregated or bonded to each other by van der Waals force, and in the present invention, graphene alone or powdery graphene powder in which two or more graphenes are aggregated or bonded is used. From the viewpoint of solving the problems, the graphene used in the rubber composition for tire sidewalls according to the second embodiment of the present invention preferably has a BET specific surface area of 550 to 850 m²/g, more preferably 650 to 750 m²/g as measured by BET method. The content of the graphene powder in the rubber composition for tire sidewalls according to the second embodiment of the present invention is preferably 1 to 10 parts by mass when the total amount of the diene-based rubber is taken as 100 parts by mass.

The rubber composition for tire sidewalls according to the second embodiment of the present invention contains a diene-based rubber, a filler, a vulcanizing agent, an antiaging agent, and a graphene powder. The rubber composition for tire sidewalls according to the second embodiment of the present invention may contain, in addition to the above, zinc oxide, stearic acid, a softener such as wax or oil, a processing aid, and others.

The rubber composition for tire sidewalls according to the second embodiment of the present invention is obtained by kneading not only the diene-based rubber, the filler, the vulcanizing agent, the antiaging agent, and the graphene powder but also zinc oxide, stearic acid, the softener such as wax, the processing aid, and others using a kneading machine usually used in the rubber industry, such as a Banbury mixer, a kneader, or a roll.

A method for blending the above components is not limited, and any one of the following methods may be used: a method in which components to be blended other than vulcanization-type compounding agents such as sulfur and a vulcanization accelerator are previously kneaded to prepare a master batch, the remaining components are added to the master batch, and the resultant is further kneaded, a method in which components are added in any order and kneaded, and a method in which all the components are added at the same time and kneaded.

The vulcanized rubber of the rubber composition according to the second embodiment of the present invention can improve the reinforcing properties of the finally obtained vulcanized rubber while reducing the content of 6PPD. Therefore, the vulcanized rubber of the rubber composition according to the second embodiment of the present invention is particularly useful for a sidewall portion of a pneumatic tire requiring durability.

### Examples

Hereinbelow, the present invention will be more specifically described with reference to examples according to the first embodiment of the present invention.

### (Preparation of rubber composition for tire treads)

A rubber composition for tire treads of each of Example 1 and Comparative Example 1 was prepared by blending compounding agents with 100 parts by mass of a rubber component in accordance with the formulation shown in Table 1 and kneading the resultant using an ordinary Banbury mixer. The compounding agents shown in Table 1 are as follows.

### (Diene-based rubber)

· Styrene-butadiene rubber: trade name "ESBR1502", manufactured by ENEOS Materials Corporation
· Butadiene rubber: trade name "UBEPOL BR150B", manufactured by UBE Corporation
· Natural rubber: RSS#3

### (Filler)

· Carbon black: trade name "SEAST 7HM", manufactured by Tokai Carbon Co., Ltd., iodine adsorption: 120 g/kg, and DBP absorption: 125 cm³/100 g

### (Graphene powder)

· Graphene powder: trade name "graphene", manufactured by FUJIFILM Wako Pure Chemical Corporation, BET specific surface area: 650 to 750 m²/g

### (Antiaging agent)

· Amine-ketone-based antiaging agent (2,2,4-trimethyl-1,2-dihydroquinoline polymer): trade name "ANTAGE RD", manufactured by Kawaguchi Chemical Industry Co., Ltd.
· 6PPD (N-(1,3-dimethylbutyl)-N'-phenyl-p-phenylenediamine): trade name "NOCRAC 6C", manufactured by OUCHI SHINKO CHEMICAL INDUSTRIAL CO., LTD.

### (Other compounding agents)

· Aroma oil: "PROCESS NC140" manufactured by ENEOS
Zinc oxide: "Zinc Oxide Variety No. 3" manufactured by Mitsui Mining & Smelting Co., Ltd.
· Stearic acid: "LUNAC S-20" manufactured by Kao Corporation
· Wax: "OZOACE 0355" manufactured by NIPPON SEIRO CO., LTD.

### (Vulcanizing agent)

· Sulfur: trade name "Powder Sulfur", manufactured by Tsurumi Chemical Industry Co., ltd.
· Vulcanization accelerator 1 (guanidine-based vulcanization accelerator): trade name "SOXINOL D", manufactured by SUMITOMO CHEMICAL COMPANY, LIMITED
· Vulcanization accelerator 2 (sulfenamide-based vulcanization accelerator): trade name "SOXINOL CZ", manufactured by SUMITOMO CHEMICAL COMPANY, LIMITED

An unvulcanized sample of the rubber composition for tire treads of each of Example 1 and Comparative Example 1 obtained above was prepared, and then the scorch (processability) was evaluated. Furthermore, each unvulcanized sample was vulcanized at 160°C for 20 minutes to produce a vulcanized rubber, and tear resistance and 300% tensile stress retention rate were evaluated under the following conditions.

### (Scorch (processability) of rubber composition for tire sidewalls)

A t5 value was measured by a Mooney scorch tester (L-type rotor) based on JIS K6300-1 under conditions of a preheating time of 1 minute and a temperature of 125°C, and expressed as an index relative to the value of Example 1 regarded as 100. The larger index indicates that scorch is less likely to occur and the scorch (processability) is more excellent.

### (Tear resistance of vulcanized rubber)

The tear resistance was evaluated by punching the vulcanized rubber obtained above in a crescent form defined by JIS K6252 to obtain a sample with a 0.50 ± 0.08 mm cut in the center of the indentation. Tear strength was measured at a tensile rate of 500 mm/min by a tensile testing machine of Shimadzu Corporation. Example 1 was displayed as an index with the value of Comparative Example 1 set as 100. A larger index indicates better tear resistance.

### (300% Tensile stress retention rate of vulcanized rubber)

For the 300% tensile stress retention rate of the vulcanized rubber, a test piece of the vulcanized rubber was subjected to a tensile test in accordance with JIS K6251 to measure 300% tensile stress, and then the test piece of the vulcanized rubber was heated for 96 hours in a gear oven temperature-controlled at 90°C in accordance with JIS K6257, and then subjected to a tensile test in the same manner to measure 300% tensile stress. The retention rate of 300% tensile stress after aging to 300% tensile stress before aging was determined, and the value of Comparative Example 1 as a reference was expressed as an index relative to the value regarded as 100. In general, in the case of the above conditions, when the aging resistance performance is poor, the numerical value of 300% tensile stress after aging increases and the 300% tensile stress retention rate becomes larger than 100, but when the aging resistance performance is excellent, the numerical value of 300% tensile stress after aging increases little and the retention rate becomes close to 100. Therefore, the smaller index means that the aging resistance performance is more excellent.

**[Table 1]**

| | | Comparative Example 1 | Example 1 |
|---|---|---|---|
| (Formulation) | | | |
| Diene-based rubber | Styrene-butadiene rubber | 48 | 48 |
| | Butadiene rubber | 34 | 34 |
| | Natural rubber | 18 | 18 |
| Filler | Carbon black | 72 | 72 |
| Other compounding agents | Aroma oil | 24 | 24 |
| | Zinc oxide | 2 | 2 |
| | Stearic acid | 2 | 2 |
| | Wax | 2 | 2 |
| Antiaging agent | Amine-ketone-based antiaging agent | 0.4 | 0.4 |
| | 6PPD | 1.6 | - |
| Graphene powder | Graphene powder | - | 1.6 |
| Vulcanizing agent | Vulcanization accelerator 1 | 0.4 | 0.4 |
| | Vulcanization accelerator 2 | 1.2 | 1.2 |
| | Sulfur | 1.8 | 1.8 |

| (Evaluation) | | | |
|---|---|---|---|
| Tear resistance | | 100 | 111 |
| Scorch (processability) | | 86 | 100 |
| 300% Tensile stress retention rate | | 100 | 99 |

From the results in Table 1, it is found that the rubber composition for tire treads according to Example 1 had a high scorch and excellent processability. It is also found that the vulcanized rubbers of the rubber composition for tire treads according to Example 1 improved the tear resistance while maintaining the 300% tensile stress retention rate (antiaging performance).

Hereinbelow, the present invention will be more specifically described with reference to examples according to the second embodiment of the present invention.

### (Preparation of rubber composition for tire sidewalls)

A rubber composition for tire sidewalls of each of Example 2 and Comparative Example 2 was prepared by blending compounding agents with 100 parts by mass of a rubber component in accordance with the formulation shown in Table 2 and kneading the resultant using an ordinary Banbury mixer. The compounding agents shown in Table 2 are as follows.

### (Diene-based rubber)

· Butadiene rubber: trade name "UBEPOL BR150B", manufactured by UBE Corporation
· Natural rubber: RSS#3

### (Filler)

· Carbon black: trade name "SEAST KH", manufactured by Tokai Carbon Co., Ltd., iodine adsorption: 90 g/kg, and DBP absorption: 119 cm³/100 g

### (Graphene powder)

· Graphene powder: trade name "graphene", manufactured by FUJIFILM Wako Pure Chemical Corporation, BET specific surface area: 650 to 750 m²/g

### (Antiaging agent)

· Amine-ketone-based antiaging agent (2,2,4-trimethyl-1,2-dihydroquinoline polymer): trade name "ANTAGE RD", manufactured by Kawaguchi Chemical Industry Co., Ltd.
· 6PPD (N-(1,3-dimethylbutyl)-N'-phenyl-p-phenylenediamine): trade name "NOCRAC 6C", manufactured by OUCHI SHINKO CHEMICAL INDUSTRIAL CO., LTD.

### (Other compounding agents)

· Aroma oil: "PROCESS NC140" manufactured by ENEOS
Zinc oxide: "Zinc Oxide Variety No. 3" manufactured by Mitsui Mining & Smelting Co., Ltd.
· Stearic acid: "LUNAC S-20" manufactured by Kao Corporation
· Wax: "OZOACE 0355" manufactured by NIPPON SEIRO CO., LTD.

### (Vulcanizing agent)

· Sulfur: trade name "Powder Sulfur", manufactured by Tsurumi Chemical Industry Co., ltd.
· Vulcanization accelerator (sulfenamide-based vulcanization accelerator): trade name "SOXINOL CZ", manufactured by SUMITOMO CHEMICAL COMPANY, LIMITED

An unvulcanized sample of the rubber composition for tire sidewalls of each of Example 2 and Comparative Example 2 obtained above was prepared, and then the scorch (processability) was evaluated. Furthermore, each unvulcanized sample was vulcanized at 160°C for 20 minutes to produce a vulcanized rubber, and 300% tensile stress retention rate and elongation retention rate of vulcanized rubber at cutting were evaluated under the following conditions.

### (Scorch (processability) of rubber composition for tire sidewalls)

A t5 value was measured by a Mooney scorch tester (L-type rotor) based on JIS K6300-1 under conditions of a preheating time of 1 minute and a temperature of 125°C, and expressed as an index relative to the value of Example 2 regarded as 100. The larger index indicates that scorch is less likely to occur and the scorch (processability) is more excellent.

### (300% Tensile stress of vulcanized rubber)

For the 300% tensile stress of the vulcanized rubber, a test piece of the vulcanized rubber was subjected to a tensile test in accordance with JIS K6251 to measure 300% tensile stress, and the value of Comparative Example 2 as a reference was expressed as an index relative to the value regarded as 100. The larger index is excellent in the reinforcing properties of the vulcanized rubber.

### (Elongation retention rate of vulcanized rubber at cutting)

Cutting elongation retention rate of vulcanized rubber was determined by tensile test according to JIS K6251 for the test pieces of vulcanized rubber, and then cutting elongation was determined for the test pieces of vulcanized rubber after 96 hours of heating in a gear oven temperature-adjusted to 90°C according to JIS K6257, followed by tensile test to determine cutting elongation. The retention ratio of the elongation at the time of cutting after aging to the elongation at the time of cutting before aging was determined, and the value of Comparative Example 2 serving as a reference was displayed by an index of 100. The larger the index, the higher the retention rate, implying superior aging-resistant performance.

**[Table 2]**

| | | Comparative Example 2 | Example 2 |
|---|---|---|---|
| (Formulation) | | | |
| Diene-based rubber | Butadiene rubber | 60 | 60 |
| | Natural rubber | 40 | 40 |
| Filler | Carbon black | 48 | 48 |
| Other compounding agents | Aroma oil | 5 | 5 |
| | Zinc oxide | 2 | 2 |
| | Stearic acid | 2 | 2 |
| | Wax | 2 | 2 |
| Antiaging agent | Amine-ketone-based antiaging agent | 2.5 | 2.5 |
| | 6PPD | 4 | - |
| Graphene powder | Graphene powder | - | 4 |
| Vulcanizing agent | Vulcanization accelerator | 0.7 | 0.7 |
| | Sulfur | 1.8 | 1.8 |

| (Evaluation) | | | |
|---|---|---|---|
| 300% Tensile stress | | 100 | 136 |
| Scorch (processability) | | 71 | 100 |
| Elongation retention rate at cutting | | 100 | 102 |

From the results in Table 2, it is found that the rubber composition for tire sidewalls according to Example 2 had a high scorch and excellent processability. It is also found that the vulcanized rubbers of the rubber composition for tire sidewalls according to Example 2 improved the reinforcing properties while maintaining the 300% tensile stress retention rate (antiaging performance).

## Claims

1. A rubber composition for tire treads comprising a diene-based rubber, a filler, a vulcanizing agent, an antiaging agent, and a graphene powder, wherein
the antiaging agent contains at least an amine-ketone-based antiaging agent, and
a content of the graphene powder is 1 to 10 parts by mass when the total amount of the diene-based rubber is taken as 100 parts by mass.

2. The rubber composition for tire treads according to claim 1, wherein the rubber composition does not contain (N-(1,3-dimethylbutyl)-N'-phenyl-p-phenylenediamine).

3. The rubber composition for tire treads according to claim 1 or 2, wherein the diene-based rubber is at least one selected from the group consisting of natural rubber, isoprene rubber, styrene-butadiene-based rubber, and butadiene-based rubber.

4. The rubber composition for tire treads according to any one of claims 1 to 3, wherein the filler is carbon black having an iodine adsorption of 105 to 135 g/kg and a DBP absorption of 115 to 135 cm³/100 g.

5. The rubber composition for tire treads according to any one of claims 1 to 4, wherein the vulcanizing agent contains at least sulfur, a sulfenamide-based vulcanization accelerator and a guanidine-based vulcanization accelerator, and a content of sulfur is higher than that of the total amount of the sulfenamide-based vulcanization accelerator and the guanidine-based vulcanization accelerator.

6. The rubber composition for tire treads according to any one of claims 1 to 5, wherein the amine-ketone-based antiaging agent is a 2,2,4-trimethyl-1,2-dihydroquinoline polymer.

7. A pneumatic tire comprising a vulcanized rubber of the rubber composition for tire treads according to any one of claims 1 to 6 in at least a tread portion.

8. A pneumatic tire comprising a vulcanized rubber of the rubber composition for tire treads according to any one of claims 1 to 6 in at least a surface of a tread portion.

9. A rubber composition for tire sidewalls comprising a diene-based rubber, a filler, a vulcanizing agent, an antiaging agent, and a graphene powder, wherein
the antiaging agent contains at least an amine-ketone-based antiaging agent, and
a content of the graphene powder is 1 to 10 parts by mass when the total amount of the diene-based rubber is taken as 100 parts by mass.

10. The rubber composition for tire sidewalls according to claim 9, wherein the rubber composition does not contain (N-(1,3-dimethylbutyl)-N'-phenyl-p-phenylenediamine).

11. The rubber composition for tire sidewalls according to claim 9 or 10, wherein the diene-based rubber is at least one selected from the group consisting of natural rubber, isoprene rubber, styrene-butadiene-based rubber, and butadiene-based rubber.

12. The rubber composition for tire sidewalls according to any one of claims 9 to 11, wherein the filler is carbon black having an iodine adsorption of 75 to 100 g/kg and a DBP absorption of 95 to 130 cm³/100 g.

13. The rubber composition for tire sidewalls according to any one of claims 9 to 12, wherein the vulcanizing agent contains at least sulfur and a sulfenamide-based vulcanization accelerator, and a content of sulfur is higher than that of a content of the sulfenamide-based vulcanization accelerator.

14. The rubber composition for tire sidewalls according to any one of claims 9 to 13, wherein the amine-ketone-based antiaging agent is a 2,2,4-trimethyl-1,2-dihydroquinoline polymer.

15. A pneumatic tire comprising a vulcanized rubber of the rubber composition for tire sidewalls according to any one of claims 9 to 14 in at least a sidewall portion.
